Europäisches Patentamt

European Patent Office

Office européen des brevets

(19)

(11) Numéro de publication: **0 190 970**
**B1**

(12) **FASCICULE DE BREVET EUROPEEN**

(45) Date de publication du fascicule du brevet:
**26.10.88**

(51) Int. Cl.⁴: **F 16 D 23/14**

(21) Numéro de dépôt: **86400205.0**

(22) Date de dépôt: **31.01.86**

(54) **Butée de débrayage, notamment pour véhicule automobile.**

(30) Priorité: **01.02.85 FR 8501423**
**25.03.85 FR 8504376**

(43) Date de publication de la demande:
**13.08.86 Bulletin 86/33**

(45) Mention de la délivrance du brevet:
**26.10.88 Bulletin 88/43**

(84) Etats contractants désignés:
**DE GB IT**

(56) Documents cités:
**FR - A - 2 255 504**
**FR - A - 2 339 100**
**GB - A - 2 073 353**
**GB - A - 2 117 476**
**US - A - 4 046 436**

(73) Titulaire: **VALEO, 64 Avenue de la Grande Armée,
F-75017 Paris (FR)**

(72) Inventeur: **Gay, Christian, 36 Rue Labat, F-75018 Paris
(FR)**
Inventeur: **Lassiaz, Philippe, 19 Rue Thiers,
F-92100 Boulogne (FR)**

(74) Mandataire: **CABINET BONNET-THIRION, 95 Boulevard
Beaumarchais, F-75003 Paris (FR)**

## Description

La présente invention concerne d'une manière générale les butées de débrayage, notamment pour véhicules automobiles.

Ainsi qu'on le sait, une butée de débrayage comporte, globalement, un élément de manœuvre, par lequel elle est destinée à être soumise à un organe de commande, en pratique une fourchette de débrayage, un élément d'attaque, par lequel elle est adaptée à agir sur le dispositif débrayeur d'un embrayage, et un capot par lequel ledit élément d'attaque est attelé axialement audit élément de manœuvre.

En pratique, pour son action sur une telle butée de débrayage, la fourchette de débrayage comporte deux doigts, et, pour ses doigts, ou, plus précisément, pour les extrémités, ou patins, de ceux-ci, il est prévu, par exemple, sur la butée de débrayage, en positions globalement diamétralement opposées l'une par rapport à l'autre, d'une part, deux facettes transversales d'appui, qui s'étendent globalement radialement, et, d'autre part, deux facettes axiales de guidage, qui, parallèles l'une à l'autre, s'étendent globalement axialement.

Ces facettes axiales de guidage, qui, en pratique, sont chacune respectivement établies au droit des facettes transversales d'appui, ont notamment pour fonction de permettre à la fourchette de débrayage, qui est fixe en rotation par rapport à l'axe de la butée de débrayage, et qui par ses doigts est au contact desdites facettes axiales de guidage de celle-ci, de s'opposer, en service, à toute rotation intempestive de la butée de débrayage autour de son axe sous les sollicitations de rotation dont elle est l'objet du fait du contact de son élément d'attaque avec le dispositif débrayeur de l'embrayage concerné.

En effet, dans le cas par exemple d'une butée de débrayage autocentreuse, c'est-à-dire d'une butée de débrayage dans laquelle l'élément d'attaque jouit d'une latitude omnidirectionnelle de cheminement par rapport à l'élément de manœuvre perpendiculairement à l'axe de l'ensemble, une telle rotation de la butée de débrayage autour de son axe en service ne pourrait manquer de perturber l'autocentrage recherché.

La présente invention vise plus particulièrement le cas des butées de débrayage «tirées», c'est-à-dire des butées de débrayage destinées à agir en traction sur le dispositif débrayeur de l'embrayage à commander.

Une telle action en traction implique, d'une part, quel'élément d'attaque de la butée de débrayage à mettre en œuvre soit engagé derrière le dispositif débrayeur de l'embrayage à commander, ou soit en prise avec une quelconque pièce, pièce d'accostage par exemple, elle-même engagée derrière ce dispositif débrayeur, et, d'autre part, que ses facettes transversales d'appui soient tournées en direction de ce dispositif débrayeur.

Il en résulte que, en service, les doigts de la fourchette de débrayage sont engagés transversalement entre les facettes transversales d'appui de la butée de débrayage et le dispositif débrayeur de l'embrayage.

Or cette fourchette de débrayage est usuellement portée, à pivotement, par le carter de la boîte de vitesses, tandis que la butée de débrayage, qui, par ailleurs, est usuellement montée à coulissement sur un guide, dit trompette, solidaire également de ce carter, est, de fait, portée par le dispositif débrayeur de l'embrayage, puisque son élément d'attaque est, soit directement, soit indirectement, par l'intermédiaire d'une pièce d'accostage, engagé derrière celui-ci.

Autrement dit, la fourchette de débrayage et la butée de débrayage appartiennent alors à deux blocs différents, à savoir, d'une part, celui comportant le carter de la boîte de vitesses, et, d'autre part, celui comportant le carter du moteur correspondant, ce dernier portant usuellement l'embrayage associé.

Dès lors, l'un des problèmes à résoudre avec les butées de débrayage «tirées» du genre concerné résulte de ce que, au montage de l'ensemble, c'est-à-dire lors du rapprochement axial relatif de ces deux blocs, il est nécessaire d'engager progressivement les doigts de la fourchette de débrayage derrière les facettes transversales d'appui de la butée de débrayage, et de ce qu'un démontage, c'est-à-dire une déconnexion l'un par rapport à l'autre de ces deux blocs, doit être, inversement, possible, pour un accès ultérieur par exemple à l'embrayage en vue d'un changement ou d'une réfection de celui-ci.

L'engagement progressif, au montage, des doigts de la fourchette de débrayage derrière les facettes transversales d'appui de la butée de débrayage, implique normalement de présenter initialement sensiblement à plat, à l'horizontale, c'est-à-dire parallèlement à l'axe de l'ensemble, la fourchette de débrayage, et, par pivotement, de la redresser progressivement à la verticale, c'est-à-dire perpendiculairement à cet axe, au fur et à mesure de l'engagement de ses doigts derrière lesdites facettes transversales d'appui de la butée de débrayage, et, au démontage, un mouvement inverse de la fourchette de débrayage est nécessaire.

De telles opérations de pivotement de la fourchette de débrayage, dans un sens ou dans l'autre, suivant qu'il s'agit du montage ou du démontage, sont malaisées à conduire, surtout lorsque cette fourchette de débrayage est montée pivotante autour d'une rotule, le degré de liberté supplémentaire dont elle dispose alors rendant encore plus compliqué le bon contrôle nécessaire de ses mouvements.

En outre, elles peuvent s'avérer impossibles, car elles imposent de disposer, pour les mouvements de la fourchette de débrayage, d'un volume mort non négligeable, qui n'est pas toujours disponible.

Pour pallier, en partie, ces difficultés, il a été déjà proposé d'assurer par encliquetage l'engagement de l'élément d'attaque de la butée de débrayage derrière le dispositif débrayeur de l'embrayage.

Dès lors, la butée de débrayage peut initialement être portée par le bloc auquel appartient le carter de la boîte de vitesses, ce qui facilite l'engagement sur elle de la fourchette de débrayage également portée par ce bloc.

Il suffit, en effet, ensuite, d'assurer un simple rapprochement axial du bloc ainsi équipé vis-à-vis du bloc moteur auquel appartient l'embrayage, puisque, au terme de ce rapprochement axial, un simple mouvement de pivotement, d'amplitude limitée, de la fourchette de débrayage, permet d'assurer l'encliquetage de la butée de débrayage sur le dispositif débrayeur de l'embrayage.

Si cette disposition satisfait au montage, il n'en est pas de même au démontage, sauf à prévoir, lorsque cela est possible, et inévitablement au prix d'une complexité supplémentaire, une possibilité de désaccouplement de la butée de débrayage par rapport au dispositif débrayeur de l'embrayage.

Dans le brevet français déposé le 15 Mai 1981 sous le No 81 09710 et publié sous le No 2 505 954, il est proposé, par ailleurs, une disposition suivant laquelle, par rapport au plan axial de l'ensemble qui leur est sensiblement perpendiculaire, les facettes aciales de guidage de la butée de débrayage sont tronquées, lesdites facettes axiales de guidage étant toutes entières disposées, l'une d'un premier côté de ce plan, l'autre de l'autre côté le celui-ci.

Grâce à une telle disposition, il n'est plus nécessaire, au montage ou au démontage de l'ensemble, d'imposer à la fourchette de débrayage un quelconque mouvement de pivotement de grande amplitude.

Il suffit, au contraire, de faire pivoter, d'un certain angle, sur elle-même, autour de son axe, la butée de débrayage, le montage relatif entre cette butée de débrayage et cette fourchette de débrayage s'apparentant en pratique à un montage du type à baïonnette ou en quart de tour.

Mais il importe, bien entendu, pour assurer, en service, un maintien convenable de la position angulaire de la butée de débrayage autour de son axe, nécessaire à la conservation de l'autocentrage, aussi bien que pour assurer, lors d'un montage ou d'un démontage, un maintien convenable de la position pivotée de cette butée de débrayage, nécessaire, elle aussi, à la sûreté d'un tel montage ou démontage, de prévoir des moyens de maintien en rotation particuliers, les facettes axiales de guidage de la butée de débrayage ne satisfaisant plus à un tel maintien que pour un sens circonférentiel, du fait que, comme indiqué, elles sont tronquées, ledit sens circonférentiel, dit ci-après sens circonférentiel préférentiel, étant en pratique choisi pour correspondre aux sollicitations en rotation dont est l'objet en service ladite butée de débrayage.

Dans la FR-A-2 505 954 mentionné ci-dessus, ces moyens de maintien sont constitués par un ressort, qui est attelé à la butée de débrayage, et qu'on attelle par ailleurs à l'un ou l'autre de deux points fixes, angulairement écartés l'un de l'autre, suivant la position angulaire à fixer pour cette butée de débrayage.

Il en résulte, au montage ou au démontage de l'ensemble, la nécessité d'une intervention manuelle, et donc la nécessité de prévoir, dans le carter de l'embrayage, un passage, ou une trappe, d'ouverture suffisante pour permettre à la main d'un opérateur d'avoir accès au volume intérieur de ce carter.

Bien que cette disposition ait donné et puisse encore donner satisfaction, cette exigence d'un passage ou d'une trappe d'ouverture notable dans le carter de l'embrayage en limite nécessairement le champ d'application.

Acceptable, par exemple, pour les véhicules industriels, elle ne l'est plus, le plus souvent pour les véhicules de tourisme, pour lesquels la place est mesurée.

En outre, en service, du faut du ressort de maintien mis en œuvre, les facettes axiales de guidage de la butée de débrayage sont en permanence sollicitées élastiquement au contact des doigts de la fourchette de débrayage, et il peut en résulter pour elles une certaine usure.

La présente invention a d'une manière générale pour objet une disposition qui, tout en permettant un montage et un démontage relatif d'une butée de débrayage et d'une fourchette de débrayage par simple rotation sur elle-même, autour de son axe, de la butée de débrayage, évite les inconvénients succinctement exposés ci-dessus.

De manière plus précise, elle a pour objet une butée de débrayage, notamment pour véhicule automobile, du genre comportant, en positions globalement diamétralement opposées l'une par rapport à l'autre, pour l'action d'un organe de commande, en pratique une fourchette de débrayage, au moins deux facettes transversales d'appui, qui s'étendent globalement radialement, cette butée de débrayage étant d'une manière générale caractérisée en ce que, en combinaison, elle comporte, a demeure, d'une part, des moyens de butée, propres à en assurer un appui circonférentiel, dans un premier sens, sur un autre organe, lors d'une rotation autour de son axe, et d'autre part, des moyens, dits ici par simple commodité moyens d'arc-boutement, propres à s'opposer, après un tel appui circonférentiel, à une rotation rétrograde de sa part, suivant un deuxième sens opposé au précédent.

Les moyens de butée ainsi mis en œuvre peuvent par exemple être formés par une patte spécifiquement prévue à cet effet, ladite patte venant, par exemple, pour l'appui circonférentiel recherché, interférer avec l'un des doigts de la fourchette de débrayage, lors de la rotation autour de son axe de la butée de débrayage; mais ils peuvent aussi bien être formés par une quelconque autre saillie déjà présente sur la butée de débrayage et aptes à interférer ainsi avec l'un des doigts de la fourchette de débrayage ou un quelconque autre organe fixe en rotation par rapport à l'axe de ladite butée de débrayage.

Quoi qu'il en soit, les moyens d'arc-boutement prévus suivant l'invention étant assujettis à demeure à la butée de débrayage, aucune intervention manuelle particulière n'est nécessaire pour assurer, au démontage, un blocage en rotation de cette butée de débrayage dans sa position pivotée propre à un tel démontage.

En effet, ces moyens d'arc-boutement interviennent d'eux-mêmes dans ce but.

Dans une forme préférée de réalisation, ces moyens d'arc-boutement sont élastiquement déformables, et il s'agit en pratique d'une simple lamelle de ressort, en sorte qu'ils peuvent venir en prise avec la fourchette de débrayage tantôt par une face transversale de cette fourchette de débrayage, pour la position angulaire de service de la butée de débrayage, pour la position pivotée de démontage de ladite butée de débrayage.

Initialement en prise avec la fourchette de débrayage par une face transversale de celle-ci, ils s'éclipsent d'eux-mêmes, élastiquement, par rapport à la fourchette de débrayage, lors de la rotation autour de son axe de la butée de débrayage, et ils viennent dès lors en prise avec cette fourchette de débrayage par une face axiale de celle-ci, en pratique la tranche d'extrémité d'un de ses doigts.

Par arc-boutement, ils s'opposent alors, comme recherché, à toute rotation rétrograde de la butée de débrayage.

Grâce à une telle intervention systématique des moyens d'arc-boutement suivant l'invention lors d'une rotation sur elle-même de la butée de débrayage, il est avantageusement possible, pour le démontage recherché, d'intervenir en aveugle, à l'aide, par exemple, d'un quelconque organe de manipulation propre à commander une telle rotation sur elle-même de cette butée de débrayage.

De manière très simple, cet organe de manipulation peut être constitué par une tige, ou pige, qui, traversant le carter de l'embrayage, à la faveur d'un passage, d'ouverture réduite, prévu à cet effet dans celui-ci, s'étend sensiblement perpendiculairement à l'axe de l'ensemble, de manière à interférer avec la butée de débrayage à faire pivoter.

Une telle tige, ou pige, trouve aisément sa place, quel que soit l'encombrement environnant.

En outre, son mouvement étant convenablement canalisé par le passage d'ouverture réduite à la faveur duquel elle pénètre dans le carter de l'embrayage, et son implantation ayant été convenablement établie en conséquence, il suffit de l'actionner de l'extérieur en simple déplacement suivant son axe pour assurer le pivotement recherché pour la butée de débrayage, et provoquer, par là, au démontage, l'intervention systématique des moyens d'arc-boutement prévus suivant l'invention sur celle-ci.

Par ailleurs, les facettes axiales de guidage de la butée de débrayage ne sont plus sollicitées élastiquement, ce qui avantageusement favorable à une minimisation de leur usure.

Enfin, en service, lorsque, comme décrit dans la FR-A-2 505 954 mentionné ci-dessus, ces facettes axiales de guidage sont toutes entières disposées d'un premier côté d'un plan axial de l'ensemble qui leur est sensiblement perpendiculaire, pour l'une, et de l'autre côté de ce plan axial, pour l'autre, en n'empêchant, ainsi, en service, que pour un sens circonférentiel préférentiel, toute rotation, sur elle-même, autour de son axe, de ladite butée de débrayage, les moyens d'arc-boutement suivant l'invention peuvent avantageusement consituer par eux-mêmes des moyens de maintien particuliers propres à s'opposer à une rotation de cette butée de débrayage autour de son axe en service dans le sens circonférentiel opposé au sens circonférentiel préférentiel précédent.

En effet, comme mentionné ci-dessus, ces moyens d'arc-boutement sont alors en prise avec la fourchette de débrayage par une face transversale de celle-ci.

Il suffit, donc, par exemple, dans ce cas, de prévoir sur cette fourchette de débrayage une quelconque saillie, par exemple un talon, propre à coopérer en butée circonférentielle avec ces moyens d'arc-boutement.

Suivant un développement de cette disposition, les facettes axiales de guidage de la butée de débrayage peuvent même être supprimées, les moyens d'arc-boutement mis en œuvre suivant l'invention pouvant consituer par eux-mêmes, en coopération avec la fourchette de débrayage, des moyens de maintien propres à s'opposer à une rotation de ladite butée de débrayage autour de son axe en service, pour l'un et l'autre des sens circonférentiels.

Suivant une autre disposition, les facettes axiales de guidage de la butée de débrayage suivant l'invention ne sont toutes entières disposées d'un premier côté du plan axial de l'ensemble qui leur est sensiblement perpendiculaire, pour l'une, et de l'autre côté de ce plan axial, pour l'autre, que sur une portion de leur longueur axiale, lesdites facettes axiales de guidage s'étendant par ailleurs chacune de part et d'autre dudit plan axial pour une autre portion de leur dite longueur axiale, au voisinage, au moins, des facettes transversales d'appui associées.

Par la portion de leur longueur axiale suivant laquelle elles s'étendent ainsi de part et d'autre du plan axial qui leur est sensiblement perpendiculaire, les facettes axiales de guidage de la butée de débrayage suivant l'invention peuvent avantageusement, et de manière connue en soi, en assurer par elles-mêmes de blocage en rotation, dans l'un et l'autre des sens circonférentiels, autour de son axe, en service, cependant que, comme précédemment, par la portion de leur longueur axiale suivant laquelle, tronquées, elles ne s'étendent que d'un côté de ce plan axial, elles en permettent la rotation sur elle-même autour de son axe nécessaire au démontage de l'ensemble.

Il suffit en effet de déplacer en conséquence la fourchette de débrayage, de manière à ce que l'extrémité de ses doigts soit alors au droit de la portion ainsi tronquée de ces facettes axiales de guidage.

Ainsi donc, par rapport à des facettes axiales de guidage traditionnelles, la surface utile de ces facettes axiales de guidage n'est plus réduite de moitié, mais seulement d'une fraction moindre, du quart par exemple, ce qui est avantageusement favorable à une minimisation des usures dont elles peuvent être l'objet, et, ces facettes axiales de guidage étant aptes à un blocage en rotation dans les deux sens circonférentiels de la butée de débrayage en service, il n'est avantageusement plus besoin de prévoir de quelconques moyens de maintien particuliers, et, par exemple, un quelconque ressort, pour le maintien en rotation, en service, de cette butée de débrayage dans le sens circonférentiel opposé au sens circonférentiel préférentiel.

Les caractéristiques et avantages de l'invention ressortiront d'ailleurs de la description qui va suivre, à titre d'exemple, en référence aux dessins schématiques annexés sur lesquels:

la figure 1 est une vue en élévation, suivant la flèche I de la figure 2, d'une butée de débrayage suivant l'invention, pour sa position angulaire de service;

la figure 2 en est, avec un arrachement, une vue en plan, suivant la flèche II de la figure 1;

la figure 3 en est une vue de côté, suivant la flèche III de la figure 1;

la figure 4 est une vue en perspective du capot mis en œuvre dans cette butée de débrayage, représentée isolément;

la figure 5 est une vue partielle en coupe transversale de ce capot, suivant la ligne V–V de la figure 4;

la figure 6 est une vue en élévation analogue à celle de la figure 1, pour la position pivotée de la butée de débryage nécessaire à son démontage relatif vis-à-vis de la fourchette de débrayage avec laquelle elle coopère;

la figure 7 est une vue partielle de côté de cette butée de débrayage dans sa position pivotée, suivant la flèche VII de la figure 6;

les figures 8 à 11 sont des vues respectivement analogues à celles des figures 1 à 4, pour une variante de réalisation;

les figures 12, 13 sont des vues partielles en coupe transversale du capot de cette variante, suivant respectivement les lignes XII–XII et XIII–XIII de la figure 11;

la figure 14 est une vue de côté analogue à celle de la figure 10, pour une position avancée de la fourchette de débrayage avec laquelle coopère la butée de débryage suivant l'invention nécessaire, pour cette variante, au démontage relatif de celle-ci vis-à-vis de cette fourchette de débrayage;

les figures 15, 16 sont, pour cette variante, des vues respectivement analogues à celles des figures 6, 7.

Globalement, et tel qu'illustré sur ces figures, sur lesquelles elle a été représentée en trait plein alors que les organes avec lesquels elle est destinée à coopérer y ont été schématisés en traits interrompus, une butée de débrayage 10 suivant l'invention comporte, de manière connue en soi, un élément de manœuvre 11, par lequel elle est destinée à être soumise à un organe de commande 12, en pratique une fourchette de débrayage, et par lequel, en outre, dans la forme de réalisation représentée, elle est adaptée à être engagée à coulissement sur un organe de guidage 13, en pratique la «trompette» entourant usuellement l'arbre de sortie d'une boîte de vitesses, un élément d'attaque 14, par lequel elle est daptée à agir sur le dispositif débrayeur 15 de l'embrayage à commander, et un capot 16, par lequel ledit élément d'attaque 14 est attelé axialement audit élément de manœuvre 11.

De manière connue en soi, la fourchette de débrayage 12 est montée pivotante sur le carter de la boîte de vitesses, non représenté sur les figures.

Par exemple, et tel que représenté, elle est montée rotative sur ce carter, autour d'un axe orthogonal à l'axe de l'organe de guidage 13.

En variante, elle est montée à rotule.

Quoi qu'il en soit, pour action sur la butée de débrayage 10, la fourchette de débrayage 12 comporte deux doigts 18, par lesquels elle encadre cette butée de débrayage 10, et dont les extrémités 19, ou patins, sont conformées de manière à pouvoir agir sur celle-ci.

Dans les formes de mise en œuvre illustrées, le dispositif débrayageur 15 de l'embrayage à commander est un diaphragme.

La butée de débrayage 10 devant agir en traction sur ce dispositif débrayeur 15, et, plus précisément, sur l'extrémité des doigts que comporte celui-ci, son élément d'attaque 14 doit être engagé derrière ce dispositif débrayeur 15, pour action sur celle de ses faces qui est opposée à elle.

Dans les formes de mise en œuvre représentées, cet engagement de la butée de débrayage 10 derrière le dispositif débrayeur 15 se fait par l'intermédiaire d'une pièce d'accostage 20, qui est portée à demeure par le dispositif débrayeur 15, et sur laquelle, par son élément d'attaque 14, la butée de débrayage 10 vient s'encliqueter élastiquement lors du montage de l'ensemble, un jonc élastiquement déformable 21 étant prévu à cet effet entre cette pièce d'accostage 20 et cet élément d'attaque 11, ledit jonc 21 étant adapté à coopérer avec une portée d'entraînement appartenant à l'un de ces organes et une gorge de retenue appartenant à l'autre de ceux-ci.

Dans les formes de réalisation représentées, la portée d'entraînement appartient à la pièce d'accostage 20 et la gorge de retenue à l'élément d'attaque 14 mais une disposition inverse est possible.

Ces dispositions sont d'ailleurs bien connues par elles-mêmes, notamment par la demande de brevet français déposée le 26 Avril 1983 sous le NO 83 06847 et publiée sous le No 2 545 172 et ne faisant pas partie par elles-mêmes de la présente invention, elles ne seront pas décrites plus en détail ici.

De manière également connue en soi, l'élément de manœuvre 11 de la butée 10 comporte un manchon 23, par lequel il est engagé à coulissement sur l'organe de guidage 13, un flasque annulaire 24, qui s'étend transversalement par rapport à l'axe de l'ensemble, à l'une des extrémités dudit manchon 23, et, à la périphérie externe de ce flasque annulaire 24, un rebord axial 25, qui, coaxial du manchon 23, s'étend annulairement autour de celui-ci, dans le même sens axial que ce manchon 23, et dans lequel sont formées, de place en place, pour l'encliquetage, ainsi qu'il apparaîtra ci-après, du capot 16, des pattes élastiquement déformables 26, au nombre de trois dans les formes de réalisation représentées, lesdites pattes élastiquement déformables 26 étant chacune séparées latéralement par des fentes axiales de la partie courante dudit rebord axial 25.

Le capot 16, qui, dans les formes de réalisation représentées, est en tôle, comprend, corollairement, d'une part, annulairement autour de l'axe de l'ensemble, une jupe 28, par laquelle il est engagé sur le rebord axial 25 de l'élément de manœuvre 11, et, d'autre part, transversalement par rapport audit axe, à l'extrémité de la jupe 28 opposée au flasque annulaire 24 de l'élément de manœuvre 11, un bord tombé 29, qui s'étend radialement en direction de cet axe.

Dans la jupe 28 sont formées, de place en place, en correspondance avec les pattes axiales 26 de l'élément de manœuvre 11, au ras du bord tombé 29, des fenêtres 30, sur la tranche transversale desquelles se crochettent, chacune respectivement, par un bourrelet, lesdites pattes axiales 26, cependant que la partie courante dudit rebord axial 25 de l'élément de manœuvre 11 prend appui, par sa tranche d'extrémité, sur ledit bord tombé 29 du capot 16.

L'élément d'attaque 14, qui est logé pour l'essentiel dans le volume interne défini par l'élément de manœuvre 11, entre son manchon 23 et son rebord axial 25, est formé, dans les formes de réalisation représentées, par un roulement à billes, dont la bague externe 32, sous la sollicitation d'une rondelle élastique à action axiale 33 prenant appui sur le flasque annulaire 24 de l'élément de manœuvre 11, porte par sa tranche opposée sur le bord tombé 29 du capot 16, et dont la bague interne 34 est adaptée, par une gorge 35, à coopérer avec le jonc élastique 21, ladite bague interne 34 faisant axialement saillie à cet effet hors du capot 16 à la faveur de l'ouverture centrale dudit bord tombé 29 de celui-ci.

Pour l'action de la fourchette de débrayage 12, la butée de débrayage 10 suivant l'invention comporte, en positions globalement diamétralement opposées l'une par rapport à l'autre, deux facettes transversales d'appui 38, qui, pour coopération avec les extrémités ou patins des doigts 18 de ladite fourchette de débrayage 12, s'étendent globalement radialement.

S'agissant d'une butée de débrayage «tirée», ces facettes transversales d'appui 38 sont axialement tournées en direction de l'extrémité de l'élément d'attaque 14, c'est-à-dire en direction de la portion dudit élément d'attaque 14 par laquelle celui-ci est adapté à agir sur le dispositif débrayeur 15 de l'embrayage à commander.

En pratique, ces facettes transversales d'appui 38 appartiennent chacune à une patte 39 qui est d'un seul tenant avec le capot 16, en s'étendant transversalement, en direction opposée à l'axe de l'ensemble, à compter de l'extrémité de la jupe 28 de celui-ci opposée à son bord tombé 29, sensiblement dans le plan du flasque annulaire 24 de l'élément de manœuvre 11.

C'est donc par l'intermédiaire du capot 16 que l'élément de manœuvre 11 est, dans ce cas, adapté à être soumis à la fourchette de débrayage 12.

En pratique, pour son raidissement, chacune des pattes 39 que présente ainsi le capot 16 a sa partie courante légèrement déportée axialement en direction du bord tombé 29 par rapport à ses bords latéraux, qui, eux, sont sensiblement à ras avec l'extrémité concernée de la jupe 28.

Pour l'action de la fourchette de débrayage 12, la butée de débrayage 10 suivant l'invention comporte, en outre, dans les formes de réalisation représentées, deux facettes axiales de guidage 40, qui, parallèles l'une à l'autre, s'étendent globalement axialement, et qui, par rapport au plan axial P de l'ensemble qui leur est sensiblement perpendiculaire, et suivant une disposition faisant l'objet de la FR-A-2 505 954 mentionné ci-dessus, sont, tronquées, lesdites facettes axiales de guidage 40 étant, sur une partie au moins de leur longueur axiale, toutes entières disposées, l'une d'un premier côté dudit plan axial P, l'autre de l'autre côté de celui-ci.

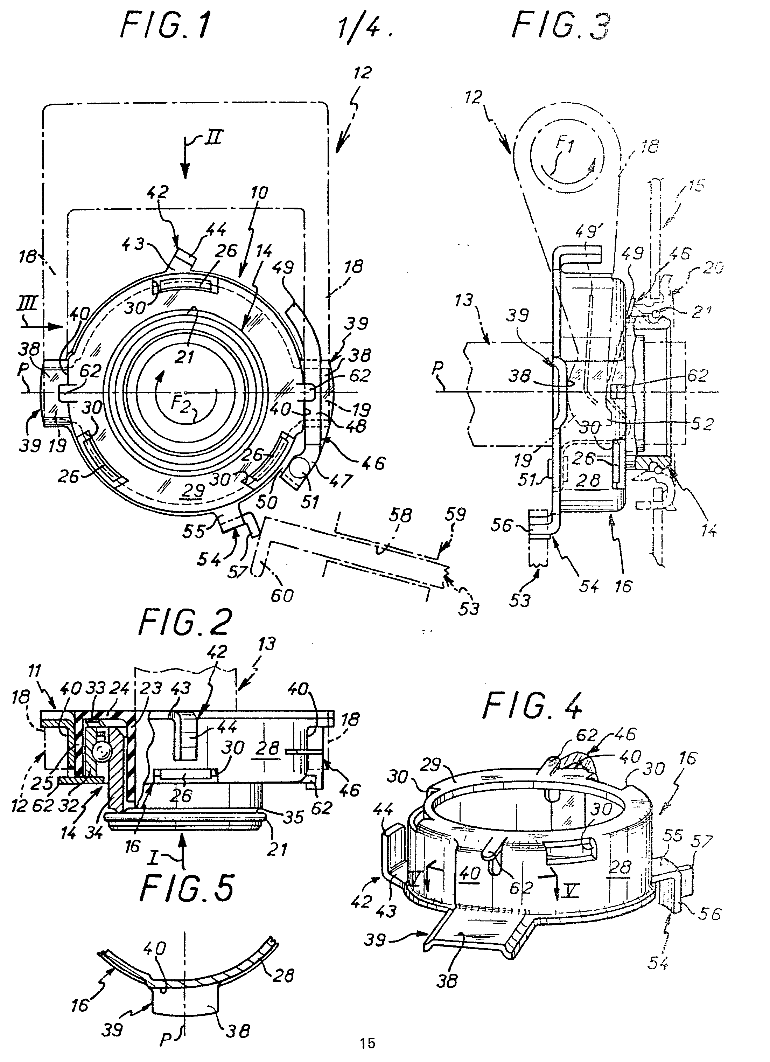

Le plan axial P considéré est schématisé par sa trace, en traits interrompus, sur les figures 1, 3 et 5.

Il correspond par ailleurs au plan de la figure 2.

En pratique, ce plan axial P passe par la zone médiane des pattes 29 du capot 16, les facettes axiales de guidage 40 s'étendant chacune respectivement sensiblement au droit des facettes transversales d'appui 38 correspondantes.

En pratique, également, ces facettes axiales de guidage 40 sont formées sur le capot 16 et s'étendent sur toute la hauteur de celui-ci.

Elles résultent de simples emboutis locaux de la jupe 28 de ce capot 16, en s'étendant sensiblement tangentiellement à la surface extérieure de celle-ci à compter du plan axial P qui leur est perpendiculaire.

Autrement dit, dans les formes de réalisation représentées, les facettes axiales de guidage 40 sont constituées par la face externe de bossages que présente en saillie dans son épaisseur la jupe 28 du capot 16, lesdits bossages se raccordant tangentiellement à la surface extérieure de cette jupe 28, sensiblement perpendiculairement au plan axial P de l'ensemble passant par la zone médiane des pattes 39 associées.

Quoi qu'il en soit, les facettes axiales de guidage 40 ont pour fonction de coopérer en contact avec les faces latérales des doigts 18 de la fourchette de débrayage 12, pour un maintien en rotation autour de son axe de la butée de débrayage 10 en service, dans un sens circonférentiel, dit ici sens circonférentiel préférentiel, ledit sens circonférentiel préférentiel correspondant aux sollicitations en rotation dont est alors l'objet ladite butée de débrayage.

Suivant l'invention, la butée de débrayage 10 comporte, en outre, à demeure, et en combinaison, d'une part des moyens de butée propres à en assurer un appui circonférentiel, dans un premier sens, sur un autre organe, lors d'une rotation autour de son axe, et, d'autre part, des moyens d'arc-boutement, propres à s'opposer, après un tel appui circonférentiel, à une rotation rétrograde de sa part, sur un deuxième sens opposé au précédent.

Dans les formes de réalisation représentées, les moyens de butée en question sont formés par une patte spécifique 42, qui s'étend globalement radialement en saillie sur le capot 16, d'un seul tenant avec celui-ci.

Cette patte 42, qui est en pratique globalement implantée à mi-chemin entre les deux pattes 39 portant les facettes transversales d'appui 38, comporte, dans les formes de réalisation représentées, un premier tronçon 43, qui, globalement transversal, s'étend en oblique à compter de l'extrémité de la jupe annulaire 28 du capot 16 opposée au bord tombé 29 de celui-ci, et un deuxième tronçon 44, qui, globalement axial, en équerre par rapport au précédent, s'étend, lui, dans l'épaisseur axiale de la butée, c'est-à-dire entre ladite extrémité de la jupe 28 du capot 16 et ledit bord tombé 29 de celui-ci.

C'est par ce tronçon globalement axial 44 que la patte 42 est destinée à coopérer en butée avec un organe extérieur à la butée de débrayage 10.

Il s'agit, en pratique, ainsi qu'il apparaîtra ci-après, de la fourchette de débrayage 12, et, plus précisément, de la face interne d'un des doigts 18 de celle-ci.

De préférence, les moyens d'arc-boutement mis par ailleurs en œuvre suivant l'invention sont élastiquement déformables, de manière à pouvoir être en prise avec la fourchette de débrayage 12 tantôt par une face transversale de cette fourchette de débrayage 12, et tantôt par une face axiale de celle-ci.

Dans les formes de réalisation représentées, ces moyens d'arc-boutement comportent une lamelle de ressort 46, qui, disposée globalement circonférentiellement autour de la butée de débrayage 10 qui la porte, comporte, successivement, un premier tronçon 47, par lequel elle est rapportée sur ladite butée de débrayage 10, un deuxième tronçon 48, par lequel elle s'étend globalement parallèlement à une facette transversale d'appui 38 de celle-ci, et un troisième tronçon 49, qui en forme l'extrémité libre d'arc-boutement.

En pratique, par son premier tronçon 47, cette lamelle de ressort 46 est rapportée sur une patte radiale 50 de la butée de débrayage 10 située circonférentiellement en-deçà de la facette transversale d'appui 38 correspondante de celle-ci par rapport à son extrémité libre 49, et donc en deçà de la fourchette axiale de guidage 40 associée à cette facette transversale d'appui 38.

Dans les formes de réalisation représentées, cette patte 50 est d'un seul tenant avec le capot 16 de la butée de débrayage 10, en continuité avec la patte 39 de celui-ci sur laquelle est formée la facette transversale d'appui 38 concernée.

En pratique, c'est par un rivet 51 que, par son tronçon 47, la lamelle de ressort 46 est ainsi rapportée sur cette patte 50 du capot 16.

Dans les formes de réalisation représentées, le deuxième tronçon 48 de la lamelle de ressort 46; a, vu de côté, figure 3, une configuration générale en forme de S, pour appui sur une face transversale de la butée de débrayage 10, et, plus précisément, sur celle des faces transversales du doigt 18 concerné de cette fourchette de débrayage 12 qui est tournée axialement du côté opposé à la facette transversale d'appui 38 correspondante.

A l'état libre, et tel que schématisé en traits interrompus 49' à la figure 3, le troisième tronçon 49 de la lamelle de ressort 46 s'étend sensiblement transversalement par rapport à l'axe de l'ensemble, et donc sensiblement parallèlement à la facette transversale d'appui 38 correspondante, dans l'épaisseur du doigt 18 concerné de la fourchette de débrayage 12.

En élévation, figure 1, les premier et troisième tronçons 47 et 49 de la lamelle de ressort 46 s'étendent en oblique par rapport au deuxième tronçon 48, ou tronçon médian, de celle-ci, d'un même côté de ce deuxième tronçon 48.

Dans la forme de réalisation plus particulièrement représentée sur les figures 1 à 7, et, compte tenu de ce que, comme mentionné ci-dessus, les facettes axiales de guidage 40 sont tout entières disposées d'un premier côté du plan axial P de l'ensemble qui leur est sensiblement perpendiculaire, pour l'une, et de l'autre côté de ce plan axial P, pour l'autre, les moyens d'arc-boutement que forme la lamelle de ressort 47 constituent par eux-mêmes des moyens de maintien particuliers propres à s'opposer à une rotation de la butée de débrayage 10 autour de son axe en service dans le sens circonférentiel opposé au sens circonférentiel préférentiel pour lequel les facettes axiales de guidage 40 assurent un tel maintien.

Pour coopération en butée circonférentielle avec de tels moyens de maintien, celui des doigts 18 de la fourchette de débrayage 12 qui est concerné par cette lamelle de ressort 46 présente, axialement en saillie à son extrémité, en direction opposée à la facette axiale de guidage 40 correspondante, et donc en direction d'un des coudes du deuxième tronçon 48 de cette lamelle de ressort 46, un talon 52, figure 3.

Par ailleurs, pour l'action d'un organe de manipulation 53 propre à en commander une rotation autour de son axe, la butée de débrayage 10 suivant l'invention comporte, dans les formes de réalisation représentées, une patte psécifique 54.

Cette patte 54, qui s'étend globalement radialement en saillie sur le capot 16, d'un seul tenant avec celui-ci, comporte un premier tronçon 55, globalement transversal, par lequel elle est issue de l'extrémité de la jupe 28 du capot 16 opposée à son bord tombé 29, et un deuxième tronçon 56, qui, globalement axial, déborde au moins pour partie axialement de l'épaisseur axiale de la butée de débrayage 10, du côté de celle-ci opposé à l'extrémité de son élément d'attaque 14.

Autrement dit, à l'inverse du tronçon axial 44 de la patte 42 précédente, ce tronçon axial 56 de la patte 54 s'étend axialement en direction opposée au bord tombé 29 du capot 16.

De préférence, et tel que représenté, il présente un retour en équerre 57 le long d'un de ses bords.

Globalement, la patte 54 ainsi constituée s'étend en position sensiblement diamétralement opposée par rapport à la patte 42 constituant les moyens de butée associés.

Dans les formes de mise en œuvre représentées, l'organe de manipulation 53 associé est une simple tige engagée à coulissement dans un passage 58, d'ouverture réduite calibrée, ménagé à cet effet, orthogonalement par rapport à l'axe de l'ensemble, dans la paroi du carter 59 de l'embrayage à commander, et, pour son action sur la patte 54 de la butée de débrayage 10, elle présente, à son extrémité, un retour en équerre 60.

Enfin, dans les formes de réalisation représentées, le capot 16 de la butée de débrayage 10 comporte, en regard chacune respectivement des pattes 39 portant les facettes transversales d'appui 38, des languettes 62, qui, venues par crevés de ce capot 16, dans le plan du bord tombé 29 de celui-ci, s'étendent sensiblement radialement parallèlement auxdites facettes transversales d'appui 38.

Au montage, et s'agissant par exemple tout d'abord de la forme de réalisation plus particulièrement représentée sur les figures 1 à 7, la butée de débrayage 10 suivant l'invention est mise en place sur son guide 13, qui est porté par le carter de la boîte de vitesses, et, par ses doigts 18, la fourchette de débrayage 12 est engagée sur elle, chacun desdits doigts 18 venant s'insérer entre la facette axiale de guidage 40 correspondante et la languette 62 qui lui est parallèle avec, en sus, pour l'un d'eux, un engagement sous le tronçon médian 48 de la lamelle de ressort 46 constituant les moyens d'arc-boutement prévus suivant l'invention, figures 1 et 3.

La fourchette de débrayage 12 est alors montée pivotante sur le carter de la boîte de vitesses.

Après rapprochement axial relatif du bloc qui, portant la boîte de vitesses, est ainsi équipé de la butée de débrayage 10 et de la fourchette de débrayage 12, vis-à-vis du bloc moteur portant l'embrayage à commander, il suffit, pour atteler la butée de débrayage 10 au dispositif débrayeur 15 de ce dernier, d'assurer un déplacement axial correspondant de cette butée de débrayage 10 en direction de ce dispositif débrayeur 15, en agissant en conséquence sur la fourchette de débrayage 12, par pivotement de celle-ci autour de son axe suivant la flèche F1 de la figure 3.

En effet, agissant sur les languettes 62 prévues à cet effet sur le capot 16 de la butée de débrayage 10, la fourchette de débrayage 12 provoque alors l'encliquetage de l'élément d'attaque 14 de cette butée de débrayage 10 sur la pièce d'accostage 20 portée par le dispositif débrayeur 15.

Pour un démontage de l'ensemble ainsi obtenu, c'est-à-dire pour un désacouplement de la fourchette de débrayage 12 vis-à-vis de la butée de débrayage 10 permettant une séparation des blocs portant cette fourchette de débrayage 12 et cette butée de débrayage 10, il suffit d'agir sur l'organe de manipulation 53.

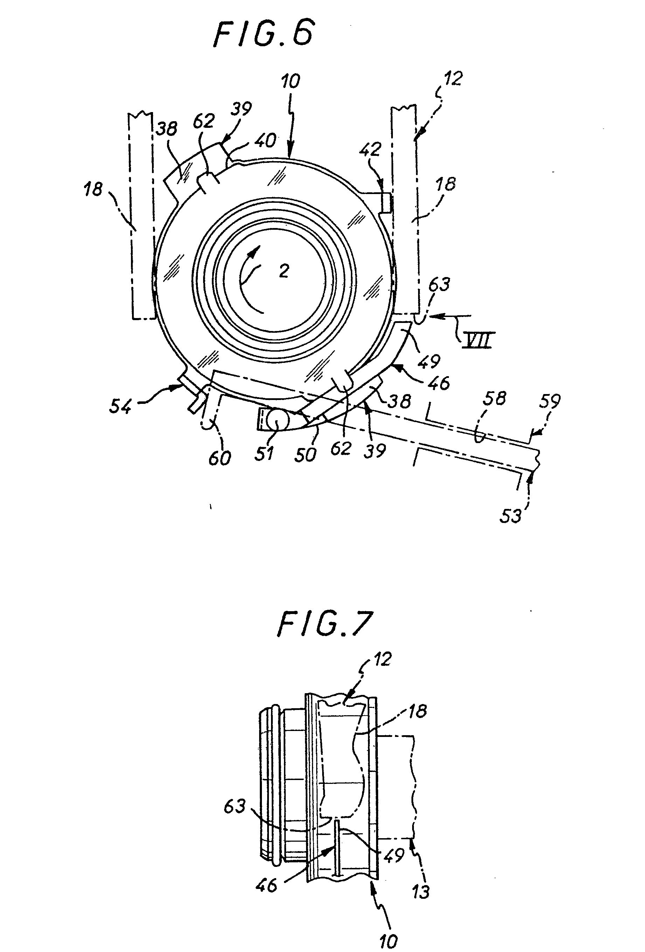

Poussé en avant, celui-ci vient en effet porter contre la patte 54 de la butée de débrayage 10 et, plus précisément, contre le retour 57 du tronçon axial 56 de celle-ci, et il en résulte une rotation sur elle-même, autour de son axe, de la butée de débrayage 10, suivant la flèche F2 de la figure 1 et de la figure 6.

Cette action, qui est en pratique effectuée en aveugle, en étant commandée de l'extérieur du carter de l'embrayage, est poursuivie jusqu'à ce que, tel qu'illustré par la figure 6, la patte 42 constituant les moyens de butée suivant l'invention vienne en appui circonférentiel sur la face interne de celui des doigts 18 de la fourchette de débrayage 12 qui est en aval dans le sens circonférentiel de rotation concerné.

Mais, conjointement, du fait qu'elle est portée par la butée de débrayage 10, la lamelle de ressort 46 constituant les moyens d'arc-boutement également prévus suivant l'invention a progressivement échappé au doigt 18 cocerné de la fourchette de débrayage 12, et, lorsqu'elle est totalement libérée par rapport à celui-ci, figures 6 et 7, elle reprend sa configuration libre de repos suivant laquelle son tronçon d'extrémité 49 s'étend sensiblement transversalement par rapport à l'axe de l'ensemble, au droit de la facette axiale d'extrémité 63 dudit doigt 18 de cette fourchette de débrayage 12, la position de celle-ci étant par ailleurs déterminée par la timonterie à laquelle, pour sa commande, elle est attelée.

Toute rotation rétrograde de la butée de débrayage 10 autour de son axe est dès lors impossible, la lamelle de ressort 46 s'opposant par arc boutement à une telle rotation rétrograde, par butée contre ladite facette axiale d'extrémité 63 du doigt 18 concerné de la fourchette de débrayage 12.

Comme, par ailleurs, les pattes 39 du capot 16 de la butée de débrayage 10 portant les facettes transversales d'appui 38 de celle-ci ont conjointement échappé au doigt 18 de la fourchette de débrayage 12, le démontage recherché est alors possible.

Bien entendu, et comme décrit dans la FR-A-2 505 954 mentionné ci-dessus, la rotation autour de son axe de la butée de débrayage 10 nécessaire à ce démontage est rendue possible par le fait que les facettes axiales de guidage 40 qu'elle comporte ne s'étendent toutes entières que d'un côté du plan axial P de l'ensemble passant par l'axe de l'ensemble, d'un premier côté de ce plan pour l'une d'elles, et de l'autre côté de ce plan pour l'autre de celles-ci.

Ainsi qu'on le notera, au montage, dans la forme de réalisation plus particulièrement représentée sur les figures 1 à 7, lors de l'encliquetage de l'élément d'attaque 14 de la butée de débrayage 10 sur la pièce d'accostage 20 portée par le dispositif débrayeur 15, le maintien en rotation de ladite butée de débrayage 10 autour de son axe, nécessaire pour en éviter le déconnexion vis-à-vis de la fourchette, de débrayage 12, est assuré, dans un sens circonférentiel, parles facettes axiales de guidage 40, et dans le sens circonférentiel opposé, par la lamelle de ressort 46 constituant les moyens d'arc-boutement suivant l'invention, en coopération dans l'un et l'autre cas avec ladite fourchette de débrayage 12, et, plus précisément, s'agissant de la lamelle de ressort 46, avec le talon 52 prévu à cet effet sur cette fourchette de débrayage 12.

Il en est de même en service dans la forme de réalisation représentée.

Par contre, au démontage, seuls interviennent, en coopération avec la fourchette de débrayage 12, ou tout autre organe de butée, les moyens d'arc-boutement suivant l'invention.

Dans la forme de réalisation plus particulièrement représentée sur les figures 1 à 7, c'est sur toute leur longueur axiale que les facettes axiales de guidage 40 de la butée de débrayage 10 sont tronquées.

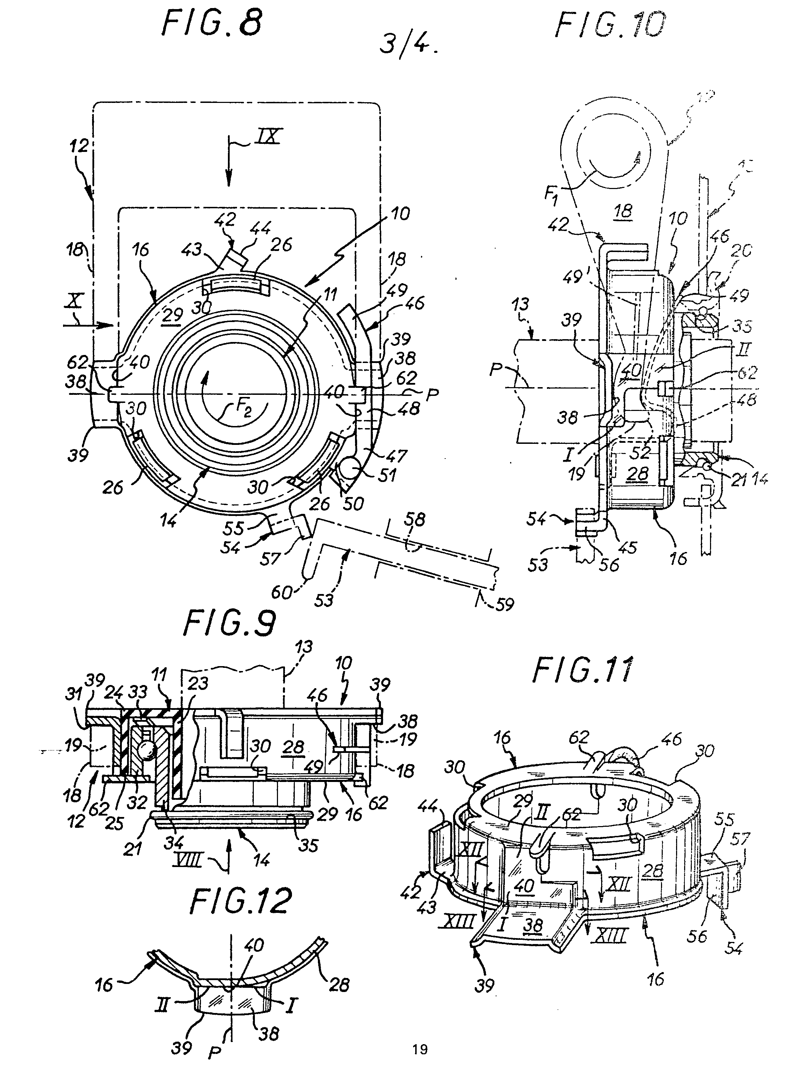

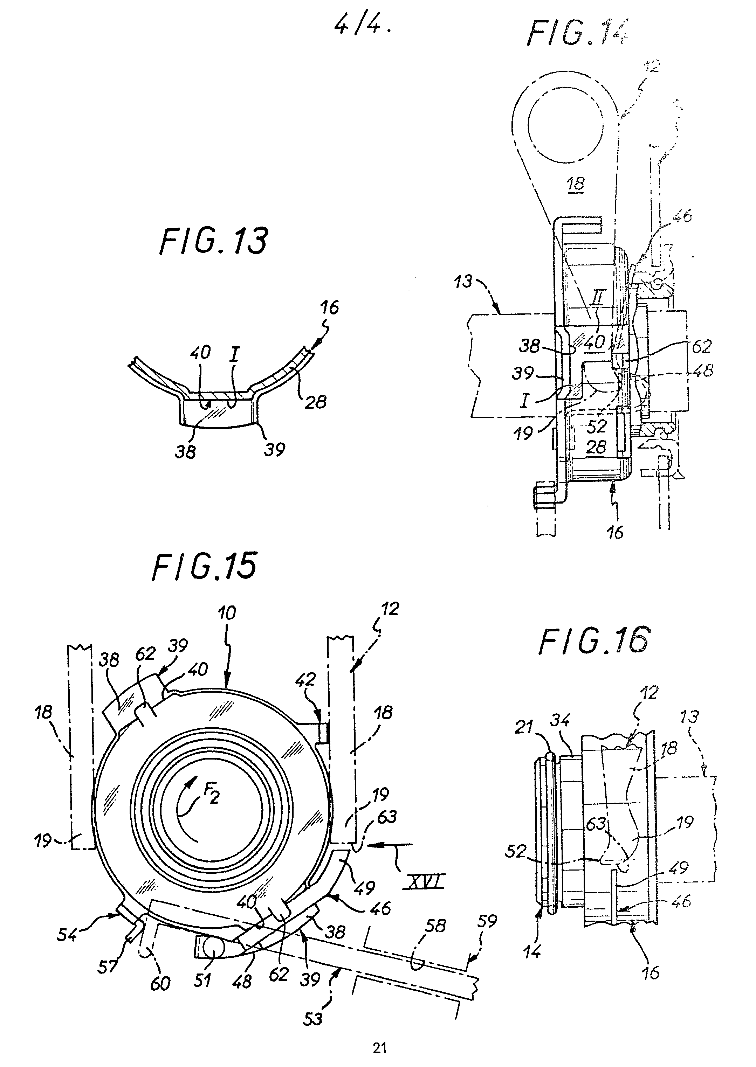

En variante, figures 8 à 16, elles ne sont ainsi tronquées que sur une portion de leur longueur axiale.

En effet, suivant cette variante, les facettes axiales de guidage 40 de la butée de débrayage 10 suivant l'invention ne s'étendent toutes entières d'un même côté du plan, axial P que pour une portion de leur longueur axiale, lesdites facettes axiales de guidage 40 s'étendant par ailleurs chacune de part et d'autre dudit plan axial P pour une autre portion de leur dite longueur axiale, au voisinage, au moins, des facettes transversales d'appui 38 associées.

Autrement dit, ces facettes axiales de guidage 40 s'étendent alors de part et d'autre du plan axial P de l'ensemble qui leur est sensiblement perpendiculaire pour une portion I au moins de leur longueur axiale, en pratique à compter des facettes transversales d'appui 38 associées, cependant que, suivant la portion restante II de celle-ci, et selon les dispositions décrites précédemment, elles sont tronquées.

Les portions I, II que présentent ainsi les facettes axiales de guidage 40 peuvent par exemple avoir une même longueur axiale.

Pour le reste, les dispositions sont du type de celles décrites précédemment.

Au montage, il est également procédé comme précédemment; il est toutefois à noter que lors de l'encliquetage de l'élément d'attaque 14 de la butée de débrayage 10 sur la pièce d'accostage 20 portée par le dispositif débrayeur 15, le maintien en rotation de ladite butée de débrayage 10 autour de son axe, nécessaire pour en éviter la déconnexion, vis-à-vis de la fourchette de débrayage 12, est assuré par celle, I, des portions des facettes axiales de guidage 40 qui s'étend de part et d'autre du plan axial P passant par leur zone médiane.

Pour le démontage, par contre, c'est-à-dire pour un désaccouplement de la fourchette de débrayage 12 vis-à-vis de la butée de débrayage 10 permettant une séparation des blocs portant cette fourchette de débrayage 12 et cette butée de débrayage 10, il faut d'abord agir sur la fourchette de débrayage 12, dans le sens de la flèche F1 de la figure 10, de manière à amener les extrémités des doigts 18 de cette fourchette de débrayage au droit de la portion II, tronquée, des facettes axiales de guidage 40 de la butée de débrayage 10.

Au cours de cette action, le tronçon médian 48 de la lamelle de ressort 46 constituant les moyens d'arc-boutement mis en œuvre se trouve refoulé élastiquement, jusqu'à, éventuellement, contact avec la languette 62 correspondante du capot 16.

Il suffit ensuite d'agir sur l'organe de manipulation 53, comme précédemment.

Poussé en avant, celui-ci vient en effet porter contre la patte 54 de la butée de débrayage 10 et, plus précisément, contre le retour 57 du tronçon axial 56 de celle-ci, et il en résulte une rotation sur elle-même, autour de son axe, de la butée de débrayage 10, suivant la flèche F2 de la figure 8 et de la figure 15, cette rotation étant alors possible du fait que c'est au droit de la portion tronquée II des facettes axiales de guidage 40 de cette butée de débrayage 10 que, comme indiqué, se situe alors l'extrémité 19 des doigts 18 de la fourchette de débrayage 12.

Cette action qui, comme précédemment, est effectuée en aveugle, est poursuivie jusqu'à ce que, comme précédemment, la lamelle de ressort 46 constituant les moyens d'arc-boutement échappe au doigt 18 concerné de la fourchette de débrayage 12.

Bien entendu, pour la rotation de la butée de débrayage 10 nécessaire au démontage, l'extrémité 19, ou patin, des doigts 18 de la fourchette de débrayage 12 doit être axialement dimensionnée con conséquence, son extension axiale devant être au plus égale à celle de la portion tronquée II des facettes axiales de guidage 40 de cette butée de débrayage 10.

Il est en outre à noter que, avec cette variante de réalisation, il n'est normalement pas besoin de saillie ou autre talon 52 à l'extrémité 19 des doigts 18 de la fourchette de débrayage 12, la portion non tronquée I des facettes axiales de guidage 40 de la butée de débrayage 10 suffisant au maintien en rotation de celle-ci, tant au démontage qu'en service.

Si toutefois, un tel talon 52 apparaît sur les figures, c'est notamment pour disposer axialement d'une surface suffisante pour la facette axiale d'extrémité 63 avec laquelle doit coopérer en butée la lamelle de ressort 46 constituant les moyens d'arc-boutement suivant l'invention.

Les moyens de butée prévus suivant l'invention surla butée de débrayage peuvent aussi être formés par une portion déjà existante de celle-ci, sans nécessiter de prévoir pour ce faire une patte spécifique sur son capot, et/ou l'organe extérieur à la butée avec lequel doivent coopérer en appui ces moyens de butée n'est pas nécessairement constitué par la fourchette de débrayage associée mais pourrait par exemple tout aussi bien être constitué par l'un ou l'autre des carters en cause.

De même au lieu d'agir sur une patte spécifique de la butée, l'organe de manipulation mis en œuvre pour assurer au démontage une rotation sur elle-même, autour de son axe, de la butée de débrayage, pourrait aussi bien agir sur une portion déjèxistante de cette butée de débrayage, et par exemple sur l'une des pattes que présente celle-ci pour former les facettes transversales d'appui nécessaires à l'action de la fourchette de débrayage.

En outre, le cas échéant, cet organe de manipulation, ou un organe de manipulation de même type, peut servir aussi au montage.

Par ailleurs, et tel que prévu dans la FR-A-2 505 954 mentionné ci-dessus, les doigts de la fourchette de débrayage peuvent être conformés de manière à faciliter au démontage le passage des pattes de la butée de débrayage portant ses facettes transversales d'appui, ce qui permet de réduire l'amplitude de la rotation à appliquer à cette butée de débrayage pour l'obtention de sa position pivotée nécessaire à ce démontage, et, par là, de réduire la longueur de la lamelle de ressort constituant les moyens d'arc-boutement mis en œuvre aussi bien que celle de l'organe de manipulation correspondant.

Dans tous les cas, et comme déjà indiqué, les moyens d'arc-boutement prévus suivant l'invention peuvent constituer à eux seuls les moyens de maintien en rotation de la butée de débrayage en service, ce qui peut permettre de s'affranchir de la présence de facettes axiales de guidage sur celle-ci; si besoin est, ces moyens d'arc-boutement peuvent comprendre non plus seulement une lamelle de ressort, mais deux, pour coopération, chacune respectivement, avec les deux doigts de la fourchette de débrayage associée.

En outre, les deux facettes transversales d'appui que présente la butée de débrayage suivant l'invention peuvent appartenir à une collerette circulairement continue de celle-ci.

Enfin, le domaine d'application de l'invention ne se limite pas nécessairement à celui des seules butées de débrayage pour lesquelles la venue en prise avec le dispositif débrayeur de l'embrayage à commander se fait par encliquetage, mais s'étend d'une manière plus générale à celui de toutes les butées de débrayage de type «tiré».

**Revendications**

1. Butée de débrayage, notamment pour véhicule automobile, du genre comportant, en positions globalement diamétralement opposées l'une par rapport à l'autre, pour l'action d'un organe de commande (12), en pratique une fourchette de débrayage, qu moins deux facettes transversales d'appui (38), qui s'étendent globalement radialement, caractérisé en ce que, en combinaison, elle comporte, à demeure, d'une part, des moyens de butée (42), propres à en assurer un appui circonférentiel, dans un premier sens, sur un autre organe, lors d'une rotation autour de son axe, et, d'autre part, des moyens d'arc-boutement (46), propres à s'opposer, après un tel appui circonférentiel, à une rotation rétrograde de sa part, suivant un deuxième sens opposé au précédent.

2. Butée de débrayage suivant la revendication 1, caractérisée en ce que lesdits moyens d'arc-boutement (46) sont élastiquement déformables, de manière à pouvoir venir en prise avec l'organe de commande (12), tantôt par une face transversale de cet organe de commande, tantôt par une face axiale de celui-ci.

3. Butée de débrayage suivant la revendication 2, caractérisée en ce que lesdits moyens d'arc-boutement comportent une lamelle de ressort (46), qui, disposée globalement circonférentiellement autour de la butée qui la porte, comporte, successivement, un premier tronçon (47), par lequel elle est rapportée surladite butée, un deuxième tronçon (48), par lequel elle s'étend globalement parallèlement à une facette transversale d'appui (38) de celle-ci, et un troisième tronçon (49), qui en forme l'extrémité libre.

4. Butée de débrayage suivant la revendication 3, caractérisée en ce que, par son premier tronçon (47), ladite lamelle de ressort (46) est rapportée sur une patte radiale (50) de la butée située circonférentiellement en-deçà de la facette transversale d'appui (38) correspondante de celle-ci par rapport à son extrémité libre.

5. Butée de débrayage suivant la revendication 3, caractérisée en ce que le deuxième tronçon (48) de ladite lamelle de ressort (46) a une configuration générale en forme de S.

6. Butée de débrayage suivant la revendication 3, caractérisée en ce que, à l'état libre, le troisième tronçon (49) de ladite lamelle de ressort (46) s'étend sensiblement transversalement par rapport à l'axe de l'ensemble.

7. Butée de débrayage suivant l'une quelconque des revendications 1 à 6, avec, pour coopération avec l'organe de commande (12), deux facettes axiales de guidage (40) qui, parallèles l'une à l'autre, s'étendent globalement axialement caractérisée en ce que, les facettes axiales de guidage (40) étant toutes entières disposées d'un premier côté du plan axial de l'ensemble qui leur est sensiblement perpendiculaire, pour l'une, et de l'autre côté de ce plan axial, pour l'autre, les moyens d'arc-boutement (46) constituent par eux-mêmes des moyens de maintien propres à s'opposer à une rotation de la butée autour de son axe en service dans le sens circonférentiel opposé au sens circonférentiel pour lequel les facettes axiales de guidage (40) assurent un tel maintien.

8. Butée de débrayage suivant la revendication 7, caractérisée en ce que les moyens d'arc-boutement (46) sont adaptés à coopérer en maintien avec un organe de commande (12) présentant axialement à cet effet une saillie, par exemple un talon (52).

9. Butée de débrayage suivant l'une quelconque des revendications 1 à 6, caractérisée en ce que, en coopération avec l'organe de commande (12), les moyens d'arc-boutement (46) constituent des moyens de maintien propres à s'opposer à une rotation de la butée de débrayage autour de son axe pour l'un et l'autre des sens circonférentiels.

10. Butée de débrayage suivant l'une quelconque des revendications 1 à 6, avec, en positions globalement diamétralement opposées l'une par rapport à l'autre, pour coopération avec l'organe de commande (12), deux facettes axiales de guidage (40), qui, parallèles l'une à l'autre, s'étendent globalement axialement, et qui, par rapport au plan axial (P) de l'ensemble qui leur est sensiblement perpendiculaire, sont, sur une portion au moins de leur longueur axiale, toutes entières disposées, l'une d'un premier côté dudit plan axial (P), l'autre de l'autre côté de celui-ci, caractérisée en ce que les facettes axiales de guidage (40) ne sont toutes entières disposées d'un premier côté du plan axial (P) de l'ensemble qui leur est sensiblement perpendiculaire, pour l'une, et de l'autre côté de ce plan axial, pour l'autre, que sur une portion (II) de leur longueur axiale, lesdites facettes axiales de guidage (40) s'étendant par ailleurs chacune de part et d'autre dudit plan axial (P) pour une autre portion (I) de leur dite longueur axiale, au voisinage, au moins, des facettes transversales d'appui (38) associées.

11. Butée de débrayage suivant la revendication 10, caractérisée en ce que les facettes axiales de guidage (40) s'étendent de part et d'autre du plan axial (P) de l'ensemble qui leur est sensiblement perpendiculaire pour une portion (I) au moins de leur longueur axiale à compter des facettes transversales d'appui (38) associées.

12. Butée de débrayage suivant l'une quelconque des revendications 10, 11, caractérisée en ce que les facettes axiales de guidage (40) ont chacune en plan un contour en L.

13. Butée de débrayage suivant l'une quelconque des revendications 1 à 12, caractérisée en ce que les moyens de butée qu'elle comporte sont formés par une patte (42) qui s'étend globalement radialement en saillie.

14. Butée de débrayage suivant la revendication 13, caractérisée en ce que ladite patte (42) comporte un tronçon globalement axial (44), dans l'épaisseur axiale de la butée, pour coopération en butée avec l'organe de commande (12) associé.

15. Butée de débrayage suivant l'une quelconque des revendications 1 à 14, caractérisée en ce que, pour l'action d'un organe de manipulation (53) propre à en commander une rotation autour de son axe, elle comporte une patte (54) qui s'étend globalement radialement en saillie.

16. Butée de débrayage suivant la revendication 15, caractérisée en ce que ladite patte (54) comporte un tronçon globalement axial (56), qui, au moins pour partie, déborde axialement de l'épaisseur axiale de la butée.

17. Butée de débrayage suivant la revendication 16, caractérisée en ce que ledit tronçon axial (56) de ladite patte (54) présente un retour en équerre (57) de long d'un de ses bords.

18. Butée de débrayage suivant l'une quelconque des revendications 1 à 17, comportant un élément de manœuvre (11), par lequel elle est destinée à être soumise à l'organe de commande (12), un élément d'attaque (14), par lequel elle est adaptée à agir sur le dispositif débrayeur (15) d'un embrayage, et un capot, (16) par lequel ledit élément d'attaque (14) est attelé axialement audit élément de manœuvre (11), avec, pour coopération avec ledit organe de commande (12), deux facettes aciales de guidage (40) qui, parallèles l'une à l'autre, s'étendent globalement axialement, caractérisée en ce que lesdites facettes axiales de guidage (40) sont formées sur le capot (16).

19. Butée de débrayage suivant les revendications 13 et 18, prises conjointement, caractérisée en ce que la patte (42) formant les moyens de butée (42) est d'un seul tenant avec le capot (16).

20. Butée de débrayage suivant les revendications 15 et 18, prises conjointement, caractérisée en ce que la patte (54) propre à l'action d'un organe de manipulation (53) est d'un seul tenant avec le capot (16).

21. Butée de débrayage suivant l'une quelconque des revendications 18 à 20, caractérisée en ce que les facettes transversales d'appui (30) appartiennent chacune à une patte (39) qui est d'un seul tenant avec le capot (16).

22. Butée de débrayage suivant les revendications 4 et 21, prises conjointement, caractérisée en ce que la patte (50) sur laquelle est rapportée la lamelle de ressort (46) est en continuité avec une patte (39) du capot, et elle est donc elle aussi d'un seul tenant avec celui-ci.

23. Butée de débrayage suivant l'une quelconque des revendications 18 à 22, caractérisée en ce que le capot (16) comporte en outre des languettes (62) qui s'étendent sensiblement radialement, parallèlement aux facettes transversales d'appui (38).

**Patentansprüche**

1. Kupplungsausrücker, insbesondere für Kraftfahrzeuge, der mindestens zwei im wesentlichen radial verlaufende und einander im wesentlichen diametral gegenüberliegende querverlaufende Auflageflächen (38) für die Aktion eines Steuerorgans (12), in der Praxis eine Ausrückgabel, aufweist, dadurch gekennzeichnet, dass er in Kombination und auf Dauer zum einen Anschlagmittel (42) aufweist, die geeignet sind, bei einer Drehung um die Achse des Ausrückers in einer bestimmten Richtung einen Anschlag in Umfangsrichtung auf einem anderen Organ sicherzustellen, und zum anderen bogenartige Abstützmittel (46), die sich nach einem solchen Anschlag in Umfangsrichtung einer rückläufigen Drehung in einer der ersten Drehrichtung entgegengesetzten zweiten Richtung widersetzen.

2. Kupplungsausrücker gemäss Anspruch 1, dadurch gekennzeichnet, dass die besagten bogenartigen Abstützmittel (46) elastisch verformbar sind, so dass sie mit dem Steuerorgan (12) sowohl über eine Querfläche dieses Steuerorgans als auch über eine Axialfläche des Steuerorgans in Eingriff treten können.

3. Kupplungsausrücker gemäss Anspruch 2, dadurch gekennzeichnet, dass die besagten bogenartigen Abstützmittel eine Federlamelle (46) aufweisen, die, im wesentlichen um den Umfang des sie tragenden Ausrückers angeordnet, aufeinanderfolgend aus einem ersten Teilabschnitt (47), mit dem sie auf dem besagten Ausrücker befestigt ist, einem zweiten Teilabschnitt (48), mit dem sie im wesentlichen parallel zu einer querverlaufenden Auflagefläche (38) des Ausrückers verläuft, und aus einem dritten Teilabschnitt (49) besteht, der an ihr das freie Ende bildet.

4. Kupplungsausrücker gemäss Anspruch 3, dadurch gekennzeichnet, dass die besagte Federlamelle (46) mittels ihres ersten Teilabschnitts (47) auf einer Radialklaue (50) des Ausrückers befestigt ist, die sich, bezogen auf das freie Ende der Federlamelle, in Umfangsrichtung diesseits der zugehörigen querverlaufenden Auflagefläche (38) befindet.

5. Kupplungsausrücker gemäss Anspruch 3, dadurch gekennzeichnet, dass der zweite Teilabschnitt (48) der besagten Federlamelle (46) eine allgemein S-förmige Konfiguration hat.

6. Kupplungsausrücker gemäss Anspruch 3, dadurch gekennzeichnet, dass der dritte Teilabschnitt (48) der besagten Federlamelle (46) im freien Zustand im wesentlichen quer zur Achse der Baugruppe verläuft.

7. Kupplungsausrücker gemäss einem der Ansprüche 1 bis 6, mit, zwecks Zusammenwirkens mit dem Steuerorgan (12), zwei axialen Führungsflächen (40), die parallel zueinander sind und sich im wesentlichen axial erstrecken, dadurch gekennzeichnet, dass von den axialen Führungsflächen (40), die eine vollständig auf einer ersten und die andere vollständig auf einer zweiten Seite der im wesentlichen senkrecht zu ihnen verlaufenden Axialebene (P) der Baugruppe angeordnet sind und die bogenartigen Abstützmittel (46) selber Haltemittel darstellen, die geeignet sind, sich im Betrieb einer Drehung des Ausrükkers um seine Achse in die Umfangsrichtung zu widersetzen, die derjenigen Umfangsrichtung entgegengestzt ist, für die die axialen Führungsflächen (40) einen solchen Halt sicherstellen.

8. Kupplungsausrücker gemäss Anspruch 7, dadurch gekennzeichnet, dass die bogenartigen Abstützmittel (46) so angepasst sind, dass sie haltend mit einem Steuerorgan (12) zusammenwirken können, welches zu diesem Zweck axial einen Vorsprung aufweist, z.B. einen Ansatz (52).

9. Kupplungsausrücker gemäss einem der Ansprüche 1 bis 6, dadurch gekennzeichnet, dass die bogenartigen Abstützmittel (46) im Zusammenwirken mit dem Steuerorgan (12) Haltemittel bilden, die geeignet sind, sich einer Drehung des Kupplungsausrückers um seine Achse in beide Umfangsrichtungen zu widersetzen.

10. Kupplungsausrücker gemäss einem der Ansprüche 1 bis 6, mit zum Zusammenwirken mit dem Steuerorgan (12) zwei einander im wesentlichen diametral gegenüberliegenden axialen Führungsflächen (40), die parallel zueinander, sich im wesentlichen axial erstrecken und die, bezogen auf die zu ihnen im wesentlichen senkrechten Axialebene (P) der Baugruppe, mindestens über einen Teilbereich ihrer axialen Länge vollständig jeweils auf einer ersten Seite der besagten Axialebene (P) bzw. auf deren zweiten Seite befinden, dadurch gekennzeichnet, dass die axialen Führungsflächen (40) nur über einen Teilbereich (II) ihrer axialen Länge vollständig, hinsichtlich der einen (Fläche) auf einer ersten Seite der besagten, im wesentlichen senkrecht zu ihnen liegenden Axialebene (P), hinsichtlich der anderen (Fläche) auf der anderen Seite dieser Ebene angeordnet sind, wobei sich die besagten axialen Führungsflächen (40) ansonsten mit einem weiteren Teilbereich (I) ihrer besagten axialen Länge zu beiden Seiten der besagten Axialebene (P) zumindest in der Nähe der zugehörigen querverlaufenden Auflageflächen (38) erstrecken.

11. Kupplungsausrücker gemäss Anspruch 10, dadurch gekennzeichnet, dass sich die axialen Führungsflächen (40) mindestens über einen Teilbereich (I) ihrer axialen Länge ab den zugehörigen querverlaufenden Auflageflächen (38) zu beiden Seiten der im wesentlichen senkrecht zu ihnen liegenden Axialebene (P) erstrecken.

12. Kupplungsausrücker gemäss einem der Ansprüche 10 und 11, dadurch gekennzeichnet, dass jede der axialen Führungsflächen (40) in der Draufsicht einen L-förmigen Umriss hat.

13. Kupplungsausrücker gemäss einem der Ansprüche 1 bis 12, dadurch gekennzeichnet, dass die zu seinen Bestandteilen zählenden Anschlagmittel durch eine Klaue (42) gebildet werden, die im wesentlichen radial vorspringt.

14. Kupplungsausrücker gemäss Anspruch 13, dadurch gekennzeichnet, dass die besagte Klaue (42) einen im wesentlichen axialen Teilabschnitt (44) in der axialen Dicke des Ausrückers aufweist, um im Anschlag mit dem zugehörigen Steuerorgan (12) zusammenzuwirken.

15. Kupplungsausrücker gemäss einem der Ansprüche 1 bis 14, dadurch gekennzeichnet, dass er für die Aktion ein durch Betätigungsorgan (53), mit dem eine Drehung um seine Achse gesteuert wird, eine Klaue (54) aufweist, die im wesentlichen radial vorspringt.

16. Kupplungsausrücker gemäss Anspruch 15, dadurch gekennzeichnet, dass die besagte Klaue (54) einen im wesentlichen axialen Teilabschnitt (56) enthält, der zumindest teilweise axial über die axiale Dicke des Ausrückers hinausragt.

17. Kupplungsausrücker gemäss Anspruch 16, dadurch gekennzeichnet, dass der besagte Teilabschnitt (56) der Klaue (54) entlang einer seiner Kanten einen rechtwinkeligen Fortsatz (57) aufweist.

18. Kupplungsausrücker gemäss einem der Ansprüche 1 bis 17, mit einem Betätigungselement (11), durch das er dem Steuerorgan (12) unterworfen ist, einem Angriffselement (14), mit dem er auf die Ausrückvorrichtung (15) einer Kupplung einwirken kann und einer Kappe (16), über die das besagte Angriffselement (14) axial mit dem besagten Betätigungselement (11) verbunden ist, mit zwei axialen Führungsflächen (40), zum zwecks Zusammenwirkens mit dem besagten Steuerorgan (12) die parallel zueinander sind und im wesentlichen axial verlaufen, dadurch gekennzeichnet, dass die besagten axialen Führungsflächen (40) auf der Kappe (16) ausgebildet sind.

19. Kupplungsausrücker gemäss den Ansprüchen 13 und 18 zusammen, dadurch gekennzeichnet, dass die die Anschlagmittel (42) bildende Klaue (42) einstückig mit der Kappe (16) ausgebildet sind.

20. Kupplungsausrücker gemäss den Ansprüchen 15 und 18 zusammen, dadurch gekennzeichnet, dass die für die Betätigung durch ein Betätigungsorgan (53) geeignete Klaue (54) einstückig mit der Kappe (16) ausgebildet ist.

21. Kupplungsausrücker gemäss einem der Ansprüche 18 bis 20, dadurch gekennzeichnet, dass die querverlaufenden Auflageflächen (30) jeweils zu einer Klaue (39) gehören, die einstückig mit der Kappe (16) ausgebildet ist.

22. Kupplungsausrücker gemäss den Ansprüchen 4 und 21 zusammen, dadurch gekennzeichnet, dass die Klaue (50), auf der die Federlamelle (46) befestigt ist, der Fortsatz einer Klaue (39) der Kappe ist und infolgedessen ebenfalls einstückig mit dieser ausgebildet ist.

23. Kupplungsausrücker gemäss einem der Ansprüche 18 bis 22, dadurch gekennzeichnet, dass die Kappe (16) des weiteren sich im wesentlichen radial und parallel zu den querverlaufenden Auflageflächen (38) erstreckende Zungen (62) aufweist.

## Claims

1. A clutch release mechanism, in particular for automobile vehicles, of the kind comprising, for the action of a control member (12), which is in practice a clutch release fork, at least two transverse bearing surfaces (38) extending generally radially, in positions generally diametrically opposite one another, characterized in that it comprises, in permanent combination, on the one hand, abutment means (42) adapted to provide circumferential bearing engagement in a first direction on another member during its rotation about its axis, and, on the other hand, bracing means (46) adapted to oppose retrograde rotation in a second direction opposite to the previous direction after such circumferential bearing engagement.

2. A clutch release mechanism according to Claim 1, characterized in that the said bracing means (46) are elastically deformable so as to be able to engage with the control member (12) sometimes through a transverse face of this control member and sometimes through an axial face thereof.

3. A clutch release mechanism according to Claim 2, characterized in that the said bracing means comprise a leaf spring (46) situated substantially circumferentially around the clutch release mechanism which carries it and comprising, in succession, a first section (47) through which it is attached to the said release mechanism, a second section (48) through which it extends generally parallel to a transverse bearing surface (38) of the latter, and a third section (48) which forms its free end.

4. A clutch release mechanism according to Claim 3, characterized in that the said leaf spring (46) is attached by its first section (47) to a radial lug (50) of the clutch release mechanism situated circumferentially on the nearer side of the corresponding transverse bearing surface (38) relative to its free end.

5. A clutch release mechanism according to Claim 3, characterized in that the second section (48) of the said leaf spring (46) has a generally S-shaped configuration.

6. A clutch release mechanism according to Claim 3, characterized in that, in the unstressed state, the third section (49) of the said leaf spring (46) extends substantially transversely relative to the axis of the assembly.

7. A clutch release mechanism according to any one of Claims 1 to 6 with, in order to cooperate with the control member (12), two axial guiding facets (40) extending generally axially, parallel to one another, characterized in that the axial guiding facets (40) are entirely disposed in the case of one of them on a first side of the axial plane of the assembly which is substantially perpendicular to them, and, in the case of the other, on the other side of this axial plane, the bracing means (46) themselves constituting retaining means adapted to oppose rotation of the clutch release mechanism during operation around its axis in the circumferential direction opposite to the circumferential direction for which the axially guiding facets (40) ensure such retention.

8. A clutch release mechanism according to Claim 7, characterized in that the bracing means (46) are adapted to cooperate to ensure retention with a control member (12) having an axial projection for this purpose, for example a heel (52).

9. A clutch release mechanism according to any one of Claims 1 to 6, characterized in that in cooperation with the control member (12), the bracing means (46) constitute retaining means adapted to oppose rotation of the clutch release mechanism about its axis in either circumferential direction.

10. A clutch release mechanism according to any one of Claims 1 to 6 with, in positions substantially diametrically opposite to one another, two guiding facets (40) to cooperate with the control member (12) which, parallel to one another, extend generally axially and which, relative to the axial plane (P) of the assembly which is substantially perpendicular to them over at least part of their axial length, are entirely disposed, one on a first side of the said axial plane (P), the other on the other side of the latter, characterized in that the axial guiding facets (40) are disposed entirely for only a part (II) of their axial lenght, in the case of one of them on a first side of the axial plane (P) of the assembly which is substantially perpendicular to them, and in the case of the other of them on the other side of this axial plane, the said axial guiding facets (40) also each extending on each side of the said axial plane (P) over another part (I) of their said axial length, in the vicinity, at least, of the associated transverse bearing surfaces (38).

11. A clutch release mechanism according to Claim 10, characterized in that the axial guiding facets (40) extend on each side of the axial plane (P) of the assembly which is substantially perpendicular to them over a part (I), at least, of their axial length starting from the associated transverse bearing surfaces (38).

12. A clutch release mechanism according to any one of Claims 10 or 11, characterized in that the axial guiding facets (40) each have an L-shaped contour in plan view.

13. A clutch release mechanism according to any one of Claims 1 to 12, characterized in that the abutment means which it comprises are formed by a lug (42) projecting substantially radially.

14. A clutch release mechanism according to Claim 13, characterized in that the said lug (42) comprises a generally axial section (44) within the axial thickness of the clutch release bearing to cooperate in abutting relationship with the associated control member (12).

15. A clutch release mechanism according to any one of Claims 1 to 14, characterized in that it comprises a lug (54) which projects substantially radially for the action of a manipulating member (53) adapted to rotate the bearing about its axis.

16. A clutch release mechanism according to Claim 15, characterized in that the said lug (54) comprises a substantially axial section (56) which, at least in part, projects axially beyond the axial thickness of the clutch release bearing.

17. A clutch release mechanism according to Claim 16, characterized in that the said axial section (56) of the said lug (54) comprises a right-angle rib (57) along one of its edges.

18. A clutch release mechanism according to any one of Claims 1 to 17, comprising an operating member (11) through which it is designed to be acted upon by the control member (12), a drive member (14) through which it is adapted to act on the clutch release device (15) of a clutch, and a cover (16) by means of which the said drive member (14) is coupled axially to the said operating member (11) with, in order to cooperate with the said control member (12), two axial guiding facets (40) extending substantially axially, parallel to one another, characterized in that the said axial guiding facets (40) are formed on the cover (16).

19. A clutch release mechanism according to Claims 13 and 18 taken together, characterized in that the lug (42) forming the abutment means (42) is in one piece with the cover (16).

20. A clutch release mechanism according to Claims 15 and 18 taken together, characterized in that the lug (54) adapted for the action of the manipulating member (53) is in one piece with the cover (16).

21. A clutch release mechanism according to any one of Claims 18 to 20, characterized in that the transverse bearing surfaces (38) each form part of a lug (39) which is in one piece with the cover (16).

22. A clutch release mechanism according to Claims 4 and 21 taken together, characterized in that the lug (50) to which the leaf spring (46) is connected is continuous with a lug (39) of the cover (16) and it is therefore in one piece with the latter.

23. A clutch release mechsnism according to any one of Claims 18 to 22, characterized in that the cover (16) also comprises tongues (62) which extend substantially radially, parallel to the transverse bearing surfaces (38).

# FIG.1

# FIG.3

# FIG.2

# FIG.4

# FIG.5

# FIG.6

# FIG.7

FIG.8

FIG.10

FIG.9

FIG.11

FIG.12

0 190 970

4/4.

FIG.13

FIG.14

FIG.15

FIG.16